# FASCICULE DE BREVET EUROPEEN

(11) **EP 1 749 323 B1**
(45) Date de publication et mention de la délivrance du brevet: **14.01.2009**
(21) Numéro de dépôt: 05769475.4
(22) Date de dépôt: 09.05.2005
(51) Int. Cl.: H01M 8/02, H01M 8/10

(54) **CELLULE DE PILE A COMBUSTIBLE A ELECTROLYTE SOLIDE**
FESTELEKTROLYT-BRENNSTOFFZELLE
SOLID ELECTROLYTE FUEL CELL

(30) Priorité: 12.05.2004 FR 0405150
(43) Date de publication de la demande: 07.02.2007
(73) Titulaire: PEUGEOT CITROËN AUTOMOBILES S.A., 78140 Vélizy Villacoublay (FR); COMMISSARIAT A L'ENERGIE ATOMIQUE, 75015 Paris (FR)
(72) Inventeur: RANDON, Vincent, F-92410 Ville D'avray (FR); LEMASSON, Damien, F-69100 Villeurbanne (FR); JONCQUET, Guillaume, F-75015 Paris (FR); LE GALLO, Patrick, F-38560 Jarrie (FR)
(74) Mandataire: Domenego, Bertrand
(86) Numéro de dépôt international: PCT/FR2005/001148
(87) Numéro de publication internationale: WO 2005/122302

(56) Documents cités:
- WO-A-00/02267
- US-A1- 2001 049 044
- US-B1- 6 593 022
- PATENT ABSTRACTS OF JAPAN vol. 1996, no. 06, 28 juin 1996 (1996-06-28) -& JP 08 050903 A (MAZDA MOTOR CORP), 20 février 1996 (1996-02-20)
- PATENT ABSTRACTS OF JAPAN vol. 1999, no. 02, 26 février 1999 (1999-02-26) -& JP 10 308227 A (FUJI ELECTRIC CO LTD), 17 novembre 1998 (1998-11-17)

## Description

La présente invention est relative à une pile à combustible à électrolyte solide.

Les piles à combustible à électrolyte solide sont des dispositifs électrochimiques destinés à produire de l'électricité, constitués d'un empilement de cellules élémentaires alimentées en gaz réactifs dans lesquelles se déroule une réaction chimique accompagnée de production d'électricité et d'un dégagement de chaleur. Une cellule élémentaire est constituée d'un "ensemble membrane électrodes" (EME) intercalé entre deux plaques bipolaires. L'ensemble membrane électrodes est constitué d'une membrane en polymère conducteur protonique assurant la fonction d'électrolyte, ayant une épaisseur comprise entre 20 et 200 µm, enserrée entre deux électrodes poreuses constituées chacune d'une couche active (du carbone poreux supportant un électrocatalyseur de platine) déposée sur une couche de diffusion (substrat en papier ou tissu de carbone). Les deux plaques bipolaires assurent la collecte du courant électrique et la distribution des gaz réactifs et d'un fluide de refroidissement. Les gaz réactifs sont d'une part de l'hydrogène qui est introduit d'un premier côté de l'ensemble membrane électrode, et d'autre part de l'oxygène ou de l'air introduit de l'autre côté de l'ensemble membrane électrodes. Lorsque les deux plaques bipolaires sont reliées électriquement, au contact de l'ensemble membrane électrodes, l'hydrogène se décompose d'une part en électrons qui sont collectés par la plaque bipolaire correspondante qui devient une anode, et d'autre part en ions H⁺ qui diffusent à travers l'ensemble membrane électrodes. L'oxygène qui est introduite de l'autre côté de l'ensemble membrane électrodes, réagit avec les ions H⁺ et des électrons qui sont fournis par la plaque bipolaire associée, qui est alors une cathode, pour produire de l'eau. Ces réactions engendrent un courant électrique circulant dans la liaison électrique entre les deux plaques bipolaires. Le courant électrique peut alors être utilisé pour des usagers divers. La chaleur de réaction est évacuée par une circulation d'eau de refroidissement dans les plaques bipolaires.

Dans un mode de réalisation bien connu, les plaques bipolaires sont constituées de plaques en graphite épaisses dans lesquelles sont usinées des nervures destinées à former des canaux de circulation de gaz et des canaux de circulation de fluides de refroidissement. L'ensemble membrane électrodes est pris en sandwich entre deux plaques bipolaires de façon à constituer une cellule élémentaire de pile à combustible. Plusieurs cellules élémentaires de pile à combustible sont empilées de façon à former une pile. Les plaque bipolaire de deux cellules élémentaires adjacentes sont alors au contact l'une de l'autre. La forme et la qualité de l'usinage des plaques de graphite est telle que le contact entre les plaques bipolaires de deux cellules adjacentes se fait sur une surface importante avec une pression homogène de façon à assurer un bon contact électrique. Cette technique présente l'inconvénient d'être coûteuse et de conduire à un encombrement important des piles à combustible, du fait notamment des épaisseurs nécessaires qui sont de l'ordre de 5 mm à 1 cm pour une cellule élémentaire.

Afin de réduire le coût des architectures de ce type de pile à combustible, on a proposé d'utiliser des tôles d'acier inoxydable à la place des plaques de graphite. Dans ce mode de réalisation, les canaux de circulation de gaz et de circuit de refroidissement sont constitués par des nervures formées par pliage ou par emboutissage des tôles d'acier inoxydable. Cette technique, plus économique que la précédente présente, cependant l'inconvénient d'être difficile à mettre en oeuvre notamment du fait des difficultés de réalisation de canaux de forme complexe et de canaux ayant une bonne précision géométrique, ce qui est nécessaire pour obtenir de bons contacts électriques et donc un bon rendement de la pile à combustible.

Des architectures de pile à combustible sont connues de JP08050903, WO 00/02267 et US 2001/049044.

Le but de la présente invention est de remédier à ces inconvénients en proposant une architecture de pile à combustible à électrolyte solide qui soit plus économiques à réaliser que celles les piles à combustible ayant des plaques bipolaires en graphite, et qui conduise à une meilleure qualité de géométrie et donc de contacts électriques que celle des piles dont les plaques bipolaires sont des tôles en acier inoxydable mises en forme par pliage ou emboutissage.

A cet effet, l'invention a pour objet une cellule de pile à combustible à électrolyte solide du type comprenant un ensemble membrane électrodes disposé entre deux plaques bipolaires comportant en outre, au moins une entretoise conductrice d'électricité disposée entre une desdites plaques bipolaires et l'ensemble membrane électrodes de façon à maintenir écartées les plaques bipolaires, l'ensemble membrane électrodes étant conformé de façon à diviser l'espace délimité par les plaques bipolaires en au moins un canal de passage d'un premier gaz et au moins un canal de passage d'un deuxième gaz.

L'au moins une entretoise est un tube destiné à recevoir un fluide de refroidissement.

L'ensemble membrane électrodes est ondulé, l'au moins une entretoise étant parallèle aux ondulations de façon à permettre une circulation d'au moins un gaz parallèlement à l'entretoise.

L'au moins une entretoise peut également comporter, sur la face destinée à coopérer avec une plaque bipolaire, au moins un embouti rentrant, de façon à ménager un passage latéral d'un gaz, un premier gaz pouvant alors circuler parallèlement à l'entretoise et le deuxième gaz perpendiculairement à l'entretoise.

L'au moins une entretoise peut comporter sur la face destinée à coopérer avec l'ensemble membrane électrodes, au moins un embouti rentrant de façon à ménager un passage latéral sous l'entretoise, et la membrane active est conformée de façon à coopérer avec l'au moins un embouti rentrant, pour permettre la circulation d'un gaz parallèlement à l'entretoise et la circulation de l'autre gaz perpendiculairement à l'entretoise. L'ensemble membrane électrodes comporte alors au moins un embouti dans une direction et un embouti dans une direction perpendiculaire de façon à permettre au gaz circulant perpendiculairement à l'entretoise de se répandre dans un espace s'étendant parallèlement à l'entretoise de façon à maximiser la surface de contact du gaz avec l'ensemble membrane électrodes.

De préférence, l'ensemble membrane électrodes est conformé de façon à créer une pluralité de canaux de circulation de gaz.

De préférence, les plaques bipolaires sont planes et sont constituées d'une feuille en métal conducteur de l'électricité tel que, par exemple, un acier inoxydable.

L'invention concerne également une pile à combustible à électrolyte solide comprenant au moins une cellule de pile combustible selon l'invention et des moyens pour serrer l'au moins une cellule de pile à combustible perpendiculairement à sa surface, de façon à assurer un contact électrique satisfaisant aux points de contact des plaques bipolaires, des entretoises et de l'ensemble membrane électrodes.

En outre, la pile à combustible à électrolyte solide comprend par exemple un cadre périphérique comportant des canaux de circulation du premier gaz et des canaux de circulation du deuxième gaz, débouchant dans les espaces de circulation des gaz correspondants des cellules de pile à combustible, et des canaux de circulation du fluide de refroidissement débouchant dans les entretoises tubulaires.

L'invention va maintenant être décrite plus en détail mais de façon non limitative au regard des figures annexées dans lesquelles :
- la figure 1 est une vue partielle en perspective avec arrachement d'un empilement de deux cellules élémentaires de pile à combustible à électrolyte solides, selon un premier mode de réalisation;
- la figure 2 est une vue partielle en perspective avec arrachement d'une cellule élémentaire de pile à combustible à électrolyte solide selon une variante du premier mode de réalisation.
- la figure 3 représente une vue partielle en perspective avec arrachement d'un deuxième mode de réalisation de cellule élémentaire de pile à combustible à électrolyte solide;
- la figure 4 représente une vue en perspective partielle d'un ensemble membrane électrodes (EME) d'une cellule élémentaire d'une pile à combustible à électrolyte solide selon le deuxième mode de réalisation;
- la figure 5 représente en perspective une vue partielle d'un empilement de plusieurs cellules élémentaires de pile à combustible électrolyte solide avec des plaques latérales de fermeture de la pile à combustible;

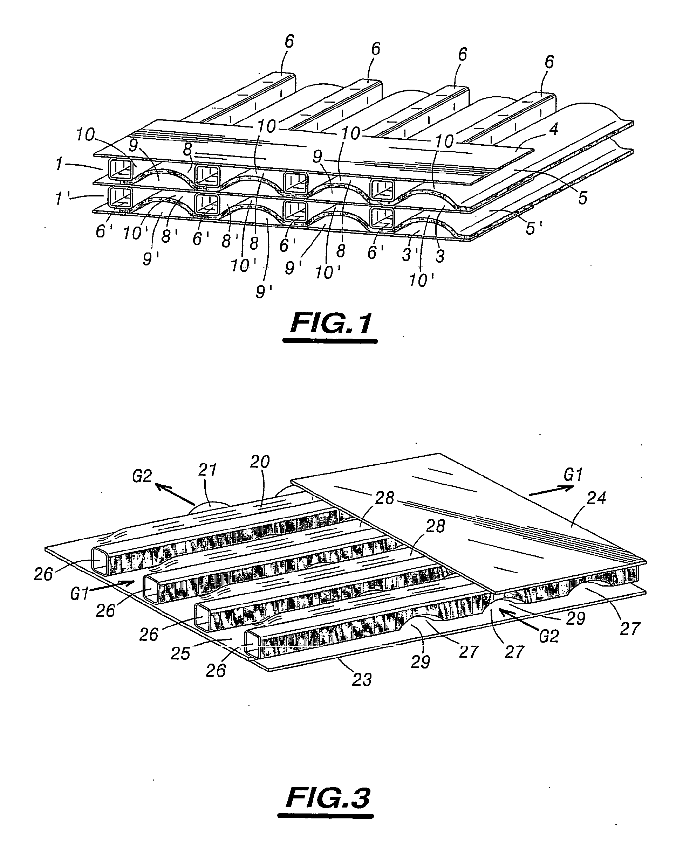

A la figure 1 on a représenté un empilement de deux cellules élémentaires 1 et 1' de pile à combustible selon un premier mode de réalisation. Chaque cellule élémentaire 1 ou 1' de pile à combustible à électrolyte solide, de forme généralement rectangulaire, est constituée d'un empilement comprenant, dans l'ordre du bas vers le haut et pour la cellule élémentaire 1, une première plaque plane en acier inoxydable 3, un ensemble membrane électrodes (EME) 5, des entretoises tubulaires 6 parallèles entre elles s'étendant dans une direction longitudinale de la cellule, et espacées de façon à laisser disponible entre deux entretoises adjacentes un espace libre 8, et une deuxième plaque plane en acier inoxydable 4 reposant sur les entretoises 6. Au droit de chaque entretoise 6, l'ensemble membrane électrodes 5 est pincé entre l'entretoise correspondante et la première plaque en acier inoxydable 3. Entre deux entretoises 6 adjacentes, l'ensemble membrane électrodes 5 est ondulé de façon à diviser l'espace 8 compris entre les deux entretoises 6, en deux espaces 9 et 10, situés de part et d'autre de l'ensemble membrane électrodes, destinés à la circulation des gaz actifs. A titre d'exemple, l'espace 9 situé entre la première plaque en acier inoxydable 3 et l'ensemble membrane électrodes 5 constitue un canal qui peut recevoir du gaz hydrogène et l'espace 10 constitue un canal qui peut recevoir l'air. L'hydrogène qui circule dans le canal 9 et l'air ou l'oxygène de l'air qui circule dans le canal 10 réagissent à travers l'ensemble membrane électrodes 5, les électrons générés par la décomposition de l'hydrogène sont collectés par la plaque en acier inoxydable 3 et les électrons nécessaires à la combinaison des ions hydrogène et de l'oxygène sont amenés au contact de l'ensemble membrane électrodes 5, par l'intermédiaire de la plaque d'acier inoxydable 4 et des entretoises 6. On notera que la disposition inverse, c'est à dire l'hydrogène circulant dans le canal 9 et l'air circulant dans le canal 8, est également possible. Les entretoises 6 qui sont des tubes, sont parcourues par un fluide de refroidissement qui est par exemple de l'eau.

La cellule élémentaire 1' adjacente à la cellule élémentaire 1 est constituée de la même façon, par la plaque en acier inoxydable 3 qui repose sur les entretoises 6', lesquelles s'appuient sur l'ensemble membrane électrodes 5', elle-même au contact avec une deuxième plaque en acier inoxydable 3'. De la même façon que pour la cellule 1, l'ensemble membrane électrodes 5' est ondulé de façon à délimiter entre les entretoises 6' des espaces 9' et 10' pour la circulation d'hydrogène et d'air. Dans cette disposition, la plaque en acier inoxydable 3 est commune à la cellule élémentaire 1 et à la cellule élémentaire 1'. Lorsque plusieurs cellules élémentaires sont empilées les unes sur les autres, les plaques en acier inoxydable 3, 3' ou 4 sont communes à deux cellules adjacentes. Cette disposition présente l'avantage que le contact entre les plaques en acier inoxydable 3, 3', ou 4, les entretoises 6, ou 6', et les ensembles membrane électrodes 5 et 5', se fait le long des faces latérales rectilignes des entretoises 6 et 6'. Du fait de cette disposition, des plaques bipolaires ayant de bons contacts électriques peuvent être obtenues en utilisant des plaques en acier inoxydable 3, 3' et 4 souples sans qu'il soit nécessaire qu'elles soient particulièrement planes. L'ensemble membrane électrodes (EME) pourra être soit pré-formé pour réaliser l'ondulation, soit ondulé au cours du montage, en utilisant des gabarits qui seront enlevés par la suite, après la mise en place des entretoises. Les gonflants de la membrane EME est assuré lors du fonctionnement de la pile à combustible par l'utilisation d'un gaz en surpression par rapport à l'autre.

Pour réaliser une pile à combustible, on réalise un empilement d'une pluralité de cellules telles qu'elles viennent d'être décrites. Pour cela, on dépose tout d'abord une tôle d'inox, puis un ensemble membrane électrodes (formé préalablement, ou formé par l'intermédiaire de gabarits), puis on dispose les entretoises sur lesquelles on pose une deuxième tôle en acier inoxydable sur laquelle on pose un ensemble membrane, puis des entretoises, puis une tôle en acier inoxydable, et ainsi de suite.

Lorsque l'empilement de cellules élémentaires est réalisé, on le dispose entre une plaque de fermeture supérieure et une plaque de fermeture inférieure, et on assure un serrage de l'empilement entre ces deux plaques de fermeture de façon à assurer une pression de contact définie entre les entretoises et les plaques bipolaires. L'ensemble est alors disposé dans un cadre, non représenté, comportant des ouvertures pour l'arrivée ou le départ des gaz réactifs et pour l'arrivée et le départ du fluide de refroidissement. Les ouvertures pour l'arrivée et le départ de chaque gaz ou du fluide de refroidissement, sont disposées au droit des canaux dans lesquels ce gaz ou fluide est destiné à circuler. Les plaques de fermetures et les cadres n'ont pas été décrits en détail car ils peuvent par, exemple, être identiques à ceux qui sont utilisés dans les piles à combustibles connues et l'homme du métier sait les réaliser sans difficultés.

On peut ainsi réaliser une pile à combustible à partir de matériaux économiques tels que des feuilles en acier inoxydable au lieu de plaques en graphite, sans qu'il soit nécessaire d'utiliser des moyens spécifiques pour garantir une tolérance étroite. Ceci permet de faire des économies de coût importantes. Cette méthode de réalisation d'une pile à combustible évite également les risques inhérents à la mise en forme de plaques d'acier inoxydable et garantit un bon contact électrique dans l'empilement. La qualité de ce contact électrique permet d'augmenter l'efficacité de la pile. Enfin un gain en encombrement peut être obtenu, car l'épaisseur de chaque cellule peut être réduite. Par rapport aux modes de réalisation connus de l'art antérieur, on peut utiliser des tôles en acier inoxydable de faible épaisseur, ce qui permet de gagner environ 5 % sur l'épaisseur des cellules. La surface de contact entre les gaz et les ensembles membrane électrodes est augmentée, ce qui accroît la puissance spécifique de la pile. Enfin, sur les bords des cellules élémentaires parallèles aux entretoises, l'ensemble membrane électrodes peut être écrasé contre les tôles d'acier inoxydable, ce qui permet d'assurer une fonction de joint.

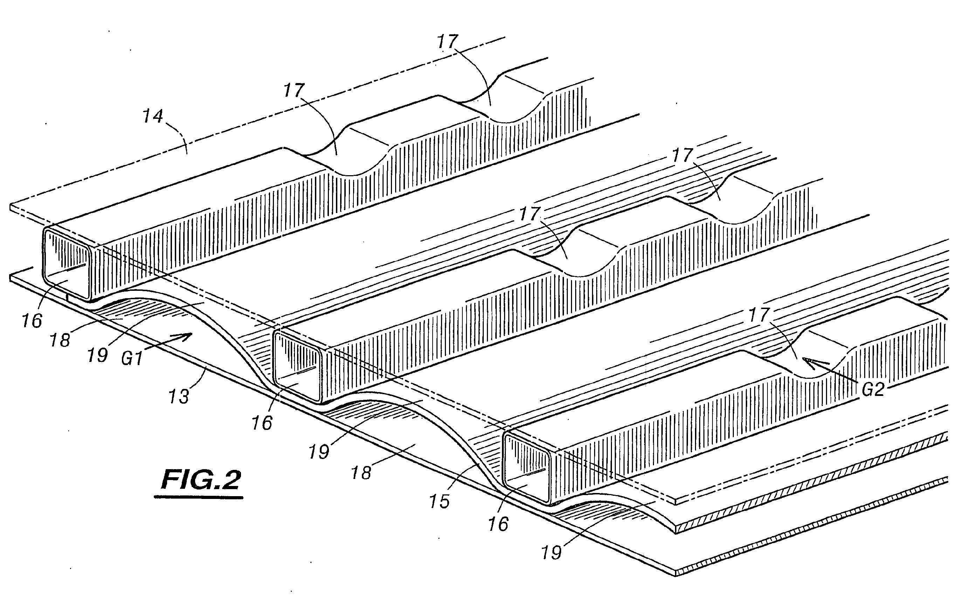

Dans un deuxième mode de réalisation représenté à la figure 2, la cellule élémentaire est constituée, comme dans le cas précédent, d'une plaque en acier inoxydable 13 sur laquelle est disposée un ensemble membrane électrodes 15 ondulé dans une direction longitudinale, et d'une deuxième plaque d'acier inoxydable plane 14, disposée sur des entretoises 16 reposant sur les parties de l'ensemble membrane électrodes en contact avec la première plaque d'acier inoxydable 13. Chaque entretoise 16 comporte des emboutis rentrants 17 prévus sur la face destinée à être en contact avec la deuxième plaque en acier inoxydable 14.

L'ensemble membrane électrodes 15, sépare l'espace situé entre les deux plaques d'acier inoxydable plane 13 et 14, en des espaces 18 et 19 de circulation des gaz.

Les espaces 18 situés entre la plaque plane 13 et l'ensemble membrane électrodes 15 sont des canaux s'étendant parallèlement aux entretoises 16 et permettant la circulation d'un gaz dans la direction indiquée par la flèche G1, parallèle aux entretoises 16. Les espaces 19 délimités par l'ensemble membrane électrodes 15, deux entretoises adjacentes et la deuxième plaque en acier inoxydable 14, communiquent entre eux par l'intermédiaire des emboutis 17. Il en résulte que le deuxième gaz peut circuler dans une direction représentée par la flèche G2, perpendiculaire à la direction de circulation du premier gaz.

Cette disposition a l'avantage de permettre de bien séparer les arrivées (ou les départs) de chacun des gaz.

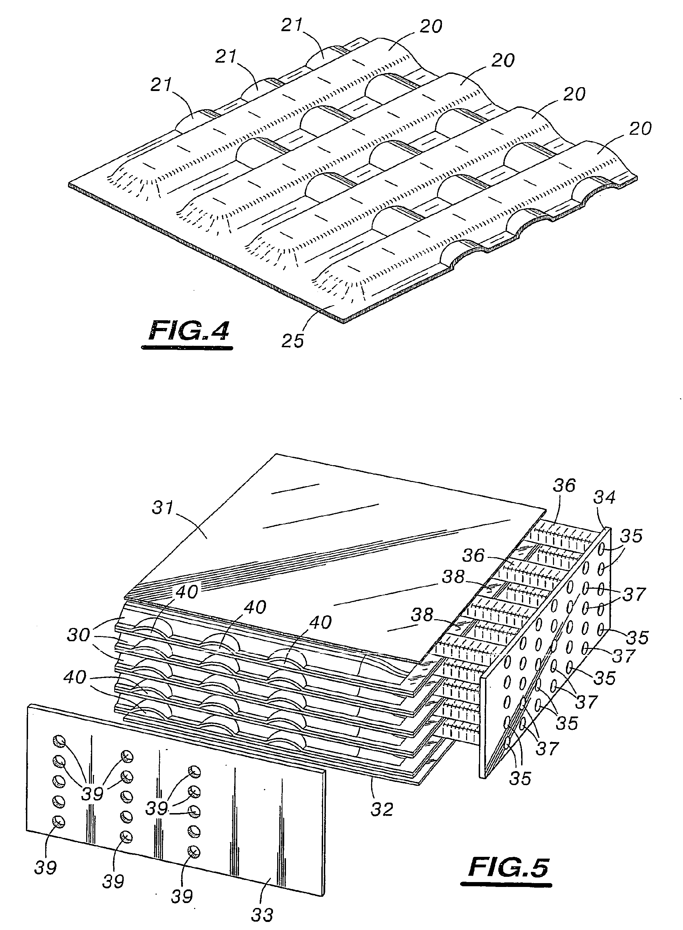

Dans un troisième mode de réalisation représenté à la figure 3, la cellule élémentaire est constituée d'une première plaque 23 plane, en acier inoxydable, sur laquelle est disposé un ensemble membrane électrodes 25, dont la forme est représentée à la figure 4. Une pluralité d'entretoises tubulaires 26 parallèles entre-elles sont disposées sur l'ensemble membrane électrodes 25. Une deuxième plaque 24 plane en acier inoxydable, repose sur les entretoises tubulaires 26. L'ensemble membrane électrodes 25 représenté à la figure 4 est conformé de façon à comporter une structure en quadrillage constituée d'une première série d'emboutis longitudinaux 20 parallèles à une première direction de l'ensemble membrane électrodes 25, et d'une série d'emboutis transversaux 21, parallèles à une deuxième direction de l'ensemble de membrane électrodes perpendiculaire à la première direction. Les emboutis de la première série d'emboutis 20 s'étendent sur toute la longueur de l'ensemble membrane électrodes, mais sont fermés à chacune de leurs extrémités. Les emboutis transversaux 21, de hauteur inférieure aux emboutis longitudinaux 20, s'étendent sur toute la largeur de l'ensemble membrane électrodes et débouchent sur les rives de l'ensemble membrane électrodes. Les entretoises 26, comportent des emboutis 27 de forme complémentaire des emboutis transversaux 21 de l'ensemble membrane électrodes. De ce fait, les entretoises 26 disposées entre deux emboutis longitudinaux 20 de l'ensemble membrane électrodes 25, s'adaptent aux emboutis transversaux 21 de l'ensemble membrane électrodes et ainsi laissent ces emboutis transversaux 21 libres pour le passage du gaz dans le sens transversal indiqué pour la flèche G2. Dans ce mode de réalisation, les espaces laissés libres entre deux entretoises 26, l'ensemble membrane électrodes 25 et la deuxième plaque d'acier inoxydable 24 constituent des canaux 28 permettant la circulation d'un gaz dans un sens représenté par la flèche G1. Les espaces disponibles entre les emboutis transversaux 21 de l'ensemble membrane électrodes et la plaque en acier inoxydable inférieure 23 constituent des canaux de passage latéraux 29 pour la circulation d'un deuxième gaz dans une direction perpendiculaire à la première et repérée par la flèche G2. Comme dans le mode de réalisation précédent, cette disposition a l'avantage de permettre de séparer les arrivées ou les départs du premier gaz des arrivées ou les départs du deuxième gaz. En outre, le gaz circulant dans les canaux transversaux 29 pouvant se répandre sous les emboutis longitudinaux 20, la surface de contact du gaz avec l'ensemble membrane électrodes est maximisé. Dans cette disposition, l'un des gaz circule dans des canaux généralement linéaires, selon une direction correspondant à la flèche G1 alors que le deuxième gaz circule dans un espace de circulation comportant des zones de çul de sac. De ce fait, il est préférable que les canaux généralement rectilignes soient alimentés par le gaz qui réagira pour former de l'eau, à savoir l'air, ou plus généralement le gaz contenant de l'oxygène. Les canaux ayant des formes comportant des culs de sac sont alors alimentés par le gaz d'hydrogène.

Dans les trois modes de réalisation qui viennent d'être décrits, l'ensemble électrodes d'une cellule élémentaire de pile à combustible est pincé entre une seule plaque plane en acier inoxydable et un ensemble d'entretoises. Autrement dit, les entretoises sont toutes disposées sur la même face de l'ensemble membrane électrodes. Mais d'autres dispositions peuvent être envisagées, par exemple l'ensemble membrane électrode étant pincé par une entretoise sur deux entre une première plaque en acier inoxydable et une entretoise, et pour les entretoises intermédiaires, entre ces entretoises et la deuxième plaque en acier inoxydable.

Quelle que soit la forme particulière de l'ensemble membrane électrodes et la façon dont il est pincé entre les entretoises et les plaques planes en acier inoxydable, on peut réaliser un empilement de cellules élémentaires afin de constituer une pile à combustible. Cet empilement est obtenu en disposant un ensemble membrane électrode et des entretoises sur une première plaque en acier inoxydable, puis recouvrant le tout d'une deuxième plaque plane en acier inoxydable, puis en recommençant en disposant un ensemble membrane électrodes et des entretoises sur la deuxième plaque plane en acier inoxydable et en recouvrant le tout d'une troisième plaque plane en acier inoxydable, et ainsi de suite.

L'empilement ainsi obtenu est alors disposé entre deux plaques de fermeture et serré entre ces plaques de façon à assurer un contact électrique satisfaisant entre les plaques planes en acier inoxydable, entre les entretoises et les ensembles membrane électrodes.

Pour que le contact soit satisfaisant, il suffit que les plaques planes en acier inoxydables soient suffisamment minces pour avoir une souplesse adaptée.

Un exemple d'empilement de cellules élémentaires est représenté schématiquement à la figure 4, sur laquelle on ne voit qu'un quart de l'empilement de cellules élémentaires. Dans cet exemple, les cellules élémentaires 30 sont serrées entre deux plaques d'extrémité 31 et 32 par des moyens de serrage non représentés mais qui peuvent être de tout type et que l'homme du métier sait réaliser. Les cellules élémentaires sont du type permettant une circulation croisée des fluides, tels que décrit ci-dessus. Les faces latérales de l'empilement de cellules élémentaires sont formées par quatre plaques latérales (deux seulement sont partiellement visibles sur les figures). D'une part, des plaques 33 parallèles aux entretoises 36 et comportant des trous 39 débouchent dans les canaux 40 de circulation d'un premier gaz. D'autre part, des plaques 34 perpendiculaires aux précédentes et comportant des trous 35 débouchant en face de l'intérieur des entretoises 36, afin de pouvoir y faire circuler le fluide de refroidissement, et des trous 37 débouchant en face des canaux 38 des cellules élémentaires, afin de pouvoir faire circuler le deuxième gaz réactif. Dans le mode de réalisation représenté, les entretoises 36 sont fixées à la plaque latérale 34. Mais cette disposition n'est pas obligatoire. L'ensemble est assemblé, et l'étanchéité est assurée à l'aide de joints non représentés mais que l'homme du métier sait réaliser.

Le lecteur comprendra que toutes les dispositions permettant la fermeture de la pile à combustible, l'amenée des gaz réactifs et du fluide de refroidissement dans les canaux de circulation de chacun de ces fluides, ainsi que leur collecte, sont possibles.

## Revendications

1. Cellule de pile à combustible à électrolyte solide du type comprenant un ensemble membrane électrodes (5, 5', 15, 25) disposé entre deux plaques bipolaires (3, 3', 4, 13, 14, 23, 24), **caractérisée en ce que** :
- elle comporte en outre au moins une entretoise (6, 6', 16, 26) conductrice d'électricité disposée entre une desdites plaques bipolaires (3, 4, 14, 24) et l'ensemble membrane électrodes (5, 5', 15, 25) de façon à maintenir écartées les plaques bipolaires,
- **en ce que** l'ensemble membrane électrodes (5, 5', 15, 25) est conformé de façon à diviser l'espace (10, 10') délimité par les plaques bipolaires en au moins un canal de passage d'un premier gaz (8, 8', 18, 28) et au moins un canal de passage d'un deuxième gaz (9, 9', 19, 29),
- **en ce que** l'au moins une entretoise (6, 6', 16, 26) est un tube destiné à recevoir un fluide de refroidissement,
- **en ce que** l'ensemble membrane électrodes (5, 5') est ondulé, et
- **en ce que** l'au moins une entretoise (6, 6') est parallèle aux ondulations de façon à permettre la circulation d'au moins un gaz parallèlement à l'entretoise (6, 6').

2. Cellule de pile à combustible selon la revendication 1, **caractérisée en ce que** l'au moins une entretoise (16) comporte sur sa face destinée à coopérer avec une plaque bipolaire (14) au moins un embouti rentrant (17) de façon à permettre la circulation d'un gaz perpendiculairement à l'entretoise (16).

3. Cellule de pile à combustible selon la revendication 1, **caractérisée en ce que** l'au moins une entretoise (26) comporte sur la face destinée à coopérer avec l'ensemble membrane électrodes (25), au moins un embouti rentrant (27) de façon à ménager un canal de passage latéral (29) sous l'au moins une entretoise (26), et la membrane active (25) est conformée de façon à permettre la circulation d'un gaz parallèlement à l'au moins une entretoise (26), et la circulation de l'autre gaz perpendiculairement à l'au moins une entretoise (26).

4. Cellule de pile à combustible selon la revendication 3, **caractérisée en ce que** la membrane active (25) comporte au moins un embouti longitudinal (20) dans une direction et un embouti transversal (21) dans une direction perpendiculaire de façon à permettre au gaz circulant perpendiculairement à l'au moins une entretoise (26), de se répandre dans un espace s'étendant parallèlement à l'au moins une entretoise (26), de façon à maximiser la surface de contact du gaz avec l'ensemble membrane électrodes (25).

5. Cellule de pile à combustible selon l'une quelconque des revendications précédentes, **caractérisée en ce que** l'ensemble membrane électrodes (5, 5', 15, 25) est conformé de façon à créer une pluralité de canaux de circulation de gaz.

6. Cellule de pile à combustible selon l'une quelconque des revendications 1 à 4, **caractérisée en ce que** les plaques bipolaires (3, 3', 4, 13, 14, 23, 24) sont planes et sont constituées d'une feuille d'un métal conducteur de l'électricité tel qu'un acier inoxydable.

7. Pile à combustible à électrolyte solide, **caractérisée en ce qu'**elle comprend au moins une cellule de pile combustible selon l'une quelconque des revendications 1 à 6 et des moyens pour assurer un serrage de l'au moins une cellule de pile à combustible perpendiculairement à sa surface, de façon à assurer un contact électrique satisfaisant aux points de contact entre les plaques bipolaires, les entretoises et l'ensemble membrane électrodes.

8. Pile à combustible à électrolyte solide selon la revendication 7, **caractérisée en ce qu'**elle comporte en outre un cadre périphérique muni de canaux de circulation d'un premier gaz et de canaux de circulation d'un deuxième gaz, lesdits canaux de circulation de gaz débouchant dans les espaces correspondants de circulation des gaz des cellules de pile à combustible, et de canaux de circulation d'un fluide de refroidissement débouchant dans les entretoises tubulaires des cellules de pile à combustible.

## Claims

1. A solid electrolyte fuel battery cell of the type comprising an electrode membrane unit (5, 5', 15, 25) disposed between two bipolar plates (3, 3', 4, 13, 14, 23, 24), **characterised in that**:
- it further comprises at least one electrically conductive spacer (6, 6', 16, 26) disposed between one of said bipolar plates (3, 4, 14, 24) and the electrode membrane unit (5, 5', 15, 25) such as to keep the bipolar plates apart from one another,
- **in that** the electrode membrane unit (5, 5', 15, 25) is formed such as to divide the space (10, 10') delimited by the bipolar plates into at least one channel for the passage of a first gas (8, 8', 18, 28) and at least one channel for the passage of a second gas (9, 9', 19, 29),
- **in that** the at least one spacer (6, 6', 16, 26) is a tube for receiving a coolant,
- **in that** the electrode membrane unit (5, 5') is undulating, and
- **in that** the at least one spacer (6, 6') is parallel to the undulations such as to enable the circulation of at least one gas parallel to the spacer (6, 6').

2. The fuel battery cell according to Claim 1, **characterised in that** the at least one spacer (16) comprises on its surface for co-operating with a bipolar plate (14) at least one inward stamp (17) such as to enable the circulation of a gas perpendicularly to the spacer (16).

3. The fuel battery cell according to Claim 1, **characterised in that** the at least one spacer (26) comprises on the surface for co-operating with the electrode membrane unit (26) at least one inward stamp (27) such as to provide a lateral passage channel (29) beneath the at least one spacer (26), and the active membrane (25) is formed such as to enable the circulation of a gas parallel to the at least one spacer (26), and the circulation of the other gas perpendicularly to the at least one spacer (26).

4. The fuel battery cell according to Claim 3, **characterised in that** the active membrane (25) comprises at least one longitudinal stamp (20) in one direction and one transverse stamp (21) in a perpendicular direction such as to enable the gas circulating perpendicularly to the at least one spacer (26) to spread within a space extending parallel to the at least one spacer (26) such as to maximise the contact surface of the gas with the electrode membrane unit (25).

5. The fuel battery cell according to any of the preceding claims, **characterised in that** the electrode membrane unit (5, 5', 15, 25) is formed such as to create a plurality of gas circulation channels.

6. The fuel battery cell according to any of Claims 1 to 4, **characterised in that** the bipolar plates (3, 3', 4, 13, 14, 23, 24) are level and are formed from a sheet of electrically conductive metal such as a stainless steel.

7. A solid electrolyte fuel battery, **characterised in that** it comprises at least one fuel battery cell according to any of Claims 1 to 6 and means for guaranteeing the tightening of the at least one fuel battery cell perpendicularly to its surface such as to guarantee a satisfactory electrical contact at the contact points between the bipolar plates, the spacers and the electrode membrane unit.

8. The solid electrolyte fuel battery according to Claim 7, **characterised in that** it further comprises a peripheral frame provided with circulation channels for a first gas and circulation channels for a second gas, said gas circulation channels opening out into the corresponding spaces for the circulation of the gases of the fuel battery cells and circulation channels for a coolant opening out into the tubular spacers of the fuel battery cells.

## Patentansprüche

1. Festelektrolyt-Brennstoffzelle der Art mit einer Elektrodenmembrananordnung (5, 5', 15, 25), die zwischen zwei bipolaren Platten (3, 3', 4, 13, 14, 23, 24) angeordnet ist, **dadurch gekennzeichnet, dass** :
- sie außerdem zumindest einen Elektrizität leitenden Steg (6, 6', 16, 26) aufweist, der zwischen den bipolaren Platten (3, 4, 14, 24) und der Elektrodenmembrananordnung (5, 5', 15, 25) derart angeordnet ist, dass er die bipolaren Platten voneinander beabstandet hält,
- dass die Elektrodenmembrananordnung (5, 5', 15, 25) derart ausgebildet ist, dass sie den von den bipolaren Platten begrenzten Raum (10, 10') in zumindest einen Durchgangskanal für ein erstes Gas (8, 8', 18, 28) und zumindest einen Durchgangskanal für ein zweites Gas (9, 9', 19, 29) unterteilt,
- dass der zumindest eine Steg (6, 6', 16, 26) ein Rohr ist, das dazu bestimmt ist, ein Kühlfluid aufzunehmen,
- dass die Elektrodenmembrananordnung (5, 5') gewellt ausgebildet ist, und
- dass der zumindest eine Steg (6, 6') derart parallel zu den Welligkeiten liegt, dass die Zirkulation zumindest eines Gases parallel zu dem Steg (6, 6') ermöglicht wird.

2. Brennstoffzelle gemäß Anspruch 1, **dadurch gekennzeichnet, dass** der zumindest eine Steg (16) auf seiner Seite, die für das Zusammenwirken mit einer bipolaren Platte (14) bestimmt ist, zumindest eine eingezogene Stulpe (17) derart aufweist, dass die Zirkulation eines Gases senkrecht zu dem Steg (16) ermöglicht wird.

3. Brennstoffzelle gemäß Anspruch 1, **dadurch gekennzeichnet, dass** der zumindest eine Steg (26) auf der Seite, die für das Zusammenwirken mit der Elektrodenmembrananordnung (25) bestimmt ist, zumindest eine eingezogene Stulpe (27) derart aufweist, dass ein seitlicher Durchgangskanal (29) unter dem zumindest einen Steg (26) ausgebildet ist, und die aktive Membran (25) derart ausgebildet ist, dass die Zirkulation des einen Gases parallel zu dem zumindest einen Steg (26) und die Zirkulation des anderen Gases senkrecht zu dem zumindest einen Steg (26) ermöglicht wird.

4. Brennstoffzelle gemäß Anspruch 3, **dadurch gekennzeichnet, dass** die aktive Membran (25) zumindest eine längliche Stulpe (20) in eine Richtung und eine quer liegende Stulpe (21) in eine senkrechte Richtung derart aufweist, dass dem senkrecht zu dem zumindest einen Steg (26) zirkulierenden Gas ermöglicht wird, sich in einem Raum zu verteilen, der sich parallel zu dem zumindest einen Steg (26) erstreckt, so dass die Kontaktfläche des Gases mit der Elektrodenmembrananordnung (25) maximiert wird.

5. Brennstoffzelle gemäß irgendeinem der vorherigen Ansprüche, **dadurch gekennzeichnet, dass** die Elektrodenmembrananordnung (5, 5', 15, 25) derart ausgebildet ist, dass eine Vielzahl von Kanälen für die Gaszirkulation geschaffen wird.

6. Brennstoffzelle gemäß irgendeinem der Ansprüche 1 bis 4, **dadurch gekennzeichnet, dass** die bipolaren Platten (3, 3', 4, 13, 14, 23, 24) eben ausgebildet sind und aus einer Tafel aus einem Elektrizität leitenden Metall wie einem rostfreien Stahl bestehen.

7. Festelektrolyt-Brennstoffzelle, **dadurch gekennzeichnet, dass** sie zumindest eine Brennstoffzelle gemäß irgendeinem der Ansprüche 1 bis 6 und Mittel zum Sicherstellen eines Festziehens der zumindest einen Brennstoffzelle senkrecht zu ihrer Oberfläche derart aufweist, dass ein zufrieden stellender elektrischer Kontakt an den Kontaktstellen zwischen den bipolaren Platten, den Stegen und der Elektrodenmembrananordnung sichergestellt wird.

8. Festelektrolyt-Brennstoffzelle gemäß Anspruch 7, **dadurch gekennzeichnet, dass** sie außerdem einen Umfangsrahmen aufweist, welcher mit Zirkulationskanälen für ein erstes Gas und Zirkulationskanälen für ein zweites Gas versehen ist, wobei die Gaszirkulationskanäle in die entsprechenden Zirkulationsräume für die Gase der Brennstoffzellen münden und die Zirkulationskanäle für ein Kühlfluid in die rohrartigen Stege der Brennstoffzellen münden.
